# EUROPEAN PATENT APPLICATION

(11) **EP 0 805 130 A2**
(43) Date of publication of application: **05.11.1997**
(21) Application number: 97500075.3
(22) Date of filing: 24.04.1997
(51) Int. Cl.: C05F 3/00

(54) **Liquid manure treating process**

(30) Priority: 29.04.1996 ES 9600968
(71) Applicant: Sicogesa Explotacion, S.A., 01192 Arkaute (Alava) (ES)
(72) Inventor: Arregui Ciarsolo, Juan Luis, 01192 Arkaute (Alava) (ES)
(74) Representative: Carpintero Lopez, Francisco

(57) **Abstract**

The process comprises submitting the liquid manure (P) to a separation stage (1) at which a semi-liquid product (S) and a liquid product (L) are obtained which follow along different routes. The semi-liquid product (S) is placed in a drying oven (2) from which an organic amendment (3) is obtained having no ammonia salts nor pathogenic components, whereas the liquid component (L) is in turn placed in evaporators (4) to which heat (C) is also applied and from which a semi-dry non-contaminating residue (R) results that may also be placed in the oven (2). The heat required for the oven (2) and the evaporators (4) is obtained from a cogeneration power plant (5), such as motors or turbines supplied with natural gas, propane, diesel oil or any other general fuel (G).

## Description

### OBJECT OF THE INVENTION

The present invention relates to a new method for treating liquid manures which is clearly designed to successfully transform said liquid manures into an organic amendment, rapidly and hygienically causing them to lose their contaminating capacity.

### BACKGROUND OF THE INVENTION

Liquid manures are known to comprise a pasty liquid formed by a mixture of stabled animal excrements and water used to keep the facilities in which said animals are kept clean.

Said liquid manures are rich in ammonia salts and other highly contaminating components and therefore when the liquid manures are poured directly onto farmland, as is frequently the case, surface and ground waters are contaminated and said liquid manures concurrently stand as an optimal culture medium for several pathogenic germs.

This practice is acceptable when the facilities are small and abundant land is available to eliminate the same, but is entirely unacceptable in farms with a high animal concentration, above all when such animals are pigs, due to the huge amount of liquid manures that are generated daily, for land availability in these cases is wholly inadequate in order for the liquid manures to be spread out with a sufficiently low density in order not to result in the problems set out hereinabove.

Various liquid manure treatment and recycling processes have been devised in an attempt at overcoming the problems inherent in farms of this kind, essentially based upon having the same ferment in order for said fermentation to result in a natural temperature increase in said liquid manures and consequently in an activation of the microorganisms therein contained, transforming the cellulose residue and forming a humus with a higher or lower fertilising capacity, which is not however noxious for a direct application onto the land. This fermentation can take place anaerobically, keeping the liquid manures stable, or aerobically, permanently or regularly stirring the same.

More specifically, French patent 2,673,070 and Spanish patent 8801909 describe a process in which the liquid manures are mixed with absorbing elements, such as paper and/or sawdust, in a tank or tub that may have stirring means, subsequently storing the resulting mixture in piles or stacks, in which they are dried by anaerobic fermentation.

Another similar process is described in European patent 0 445 102 and in French patent 2,260,550, in which the liquid manures are mixed with absorbing elements, such as straw, sawdust, used paper, waste wood or household waste, placing the mixture in heavily aerated tumblers or stirrers.

The Spanish 9102526 and WO 90/10610 patents disclose a process in which the mixture formed by the liquid manures and absorbents also has a bacterial crop added to it in stirring vats, the resulting mixture being also in this case arranged in piles and regularly tipped in order to achieve a quicker fermentation.

These processes have two major shortfalls as their common denominator, namely on the one hand the powerful smells let off during fermentation, although such smells are less powerful when fermentation is aerobic instead of anaerobic, and on the other the very long time taken for the mixtures to ferment, which may even take several weeks, and thus the liquid manure treatment capacity with processes of this kind is very small.

### DESCRIPTION OF THE INVENTION

The process subject of the invention fully solves both aspects of the problems set out above.

More specifically, and in order to achieve the above, said process relies on a forced drying of the liquid manures, applying heat, thereby to prevent the liquid manure from fermenting and consequently letting off smells, said forced drying contemporaneously resulting in the process being performed in very little time. As a result of said process, an organic amendment is obtained without any pathogenic elements or noxious salts, which may consequently be applied onto the land, either directly, or after being enriched with mineral elements to obtain a suitable organic manure.

Specifically, the process disclosed herein starts with a first stage at which the liquid manure is separated using suitable sieves or screens to obtain a liquid product and a semi-liquid product.

The semi-liquid product is passed though an oven in which it is heated to a sufficient temperature to be rid of ammonia salts and other pathogenic elements, and the product leaving this oven can therefore be deemed to be an organic amendment.

As for the liquid component obtained after the first separating stage, the same is placed in evaporators or evaporating panels with which a semi-dry residue is obtained, likewise upon heat being applied, which is mechanically separated and added to the semi-liquid product obtained at the first stage, both components being finally dried in an oven.

The heat supplied both to the oven and the evaporators is obtained from a cogeneration power plant that uses motors or turbines supplied with a widely used fuel such as natural gas, propane, diesel oil, heavy oil or any other suitable fuel for use in heating machines.

The heating process applied to the liquid manures results in their being quickly desiccated in the absence of fermentations and hence in the absence of the bad smells let off by the latter, said process being at the same time extremely quick, which means that the capacity to treat the relevant facility is considerably high.

### DESCRIPTION OF THE DRAWINGS

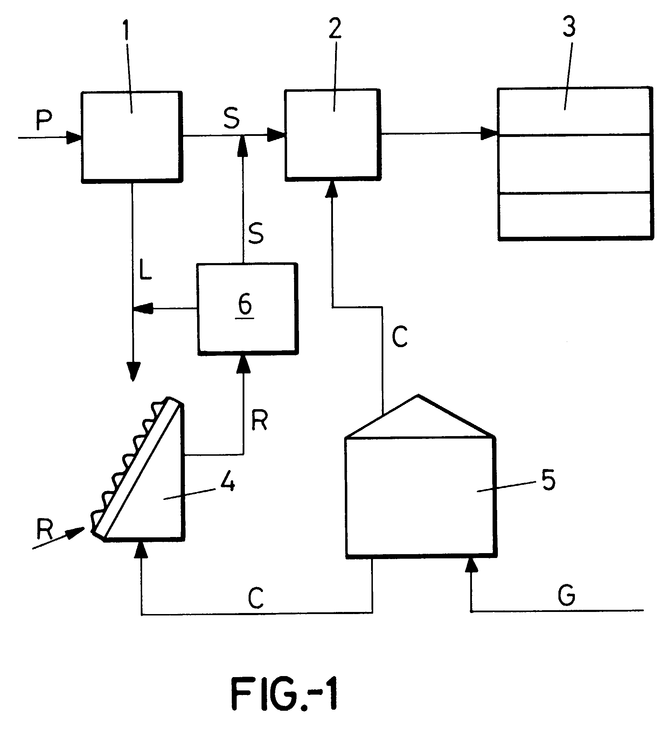

In order to provide a fuller description and contribute to the complete understanding of the characteristics of this invention, a single sheet of drawings is attached to the specification with its only figure showing, in a purely illustrative and non-limitative manner, a diagram of the working of the process for recycling liquid manures subject of the present invention.

### PREFERRED EMBODIMENT OF THE INVENTION

With reference to this figure, it will be found that in accordance with the process disclosed herein, the liquid manures (P) to be processed go through a first separation or screening stage (1) which results in a semi-liquid product (S) and a liquid product (L). Separation can be effected by filtration, decantation, centrifugation, flotation or any other conventional method whatsoever.

The semi-liquid product (S) is supplied to a drying oven (2) where the same is heated, as explained hereinbefore, to a temperature sufficing to eliminate both ammonia salts and other pathogenic elements, a solid, non-contaminated organic amendment (3) leaving the oven (2).

The liquid product (L) is at the same time supplied to evaporators (4) in which heat is supplied to achieve a similarly rapid transformation into a semi-dry residue (R), which is later added, after being mechanically separated (6), to the semi-liquid product (S) obtained at the first separation stage, thereafter for the latter to be dried in the oven (2).

The heat (C) required for both the oven (2) and the evaporators (4) to operate is obtained from a cogeneration power plant (5) consisting of motors or turbines supplied with a general fuel (G) such as natural gas, propane, diesel oil, heavy oil or the like.

In accordance with the foregoing, the essential characteristic of the process is quite naturally focussed on the fact that the elimination of the contaminating liquid manure components takes place by directly applying heat, in the absence of fermentation, which means that classic smells are no longer let off, and the process is contemporaneously extremely quick, with an extensive capacity to treat the relevant facility. Furthermore, the power required to heat the oven (2) and the evaporators (4) is obtained from a cogeneration plant (5) using widely used, inexpensive fuels to supply the same.

## Claims

1. A liquid manure treating process, characterised in that said liquid manures (P) are submitted to a first separation stage by screening (1), filtration, decantation, flotation, etc., which separately yields a semi-liquid product (S) and a liquid product (L), the semi-liquid product (S) being designed to be submitted to a heating stage in a drying oven (2) from which an organic amendment (3) is obtained which has no ammonia salts nor pathogenic elements, whereas the liquid component (L) is supplied to evaporators (4) in which heat (C) is similarly applied to obtain a semi-dry residue (R) with characteristics resembling those of that obtained at the first stage (1), which, after being mechanically separated (6), is added to the semi-liquid (S) thereafter after for drying of both components to be completed in the oven (2) to obtain an organic amendment which may be directly applied onto the soil or may be enriched with mineral elements.

2. A liquid manure treating process, as in claim 1, characterised in that the heat (C) supplied both to the oven (2) and the evaporators (4), is obtained through a cogeneration power plant (5) using propane, diesel oil or another like general fuel (G).
